# EUROPEAN PATENT SPECIFICATION

(11) **EP 0 415 425 B1**
(45) Date of publication and mention of the grant of the patent: **06.03.1996**
(21) Application number: 90116681.9
(22) Date of filing: 30.08.1990
(51) Int. Cl.: G03B 42/04

(54) **Film loading device**
Filmladevorrichtung
Dispositif de chargement de films

(30) Priority: 31.08.1989 JP 103325/89 U; 31.08.1989 JP 227922/89; 31.08.1989 JP 227923/89; 14.12.1989 JP 144286/89 U
(43) Date of publication of application: 06.03.1991
(73) Proprietor: FUJI PHOTO FILM CO., LTD., Kanagawa 250-01 (JP)
(72) Inventor: Komatsu, Akihiro c/o Fuji Photo Equip. Co. Ltd, Kangawa-ken 250-01 (JP); Osawa, Masanori, c/o Fuji Photo Equip.Co.Ltd., Kangawa-ken 250-01 (JP); Takashima, Yutaka, c/o Fuji Photo Film Co Ltd, Tokyo 106 (JP)
(74) Representative: Grünecker, Kinkeldey, Stockmair & Schwanhäusser Anwaltssozietät

(56) References cited:
- EP-A- 0 231 834
- DE-A- 3 306 720
- US-A- 4 018 033
- PATENT ABSTRACTS OF JAPAN vol. 13, no. 73 (P-830)(3421) 20 February 1989

## Description

### BACKGROUND OF THE INVENTION

The present invention relates to a film loading device for feeding a film from a magazine to a cassette in a bright room.

When a photographic film is to be exposed to the radiation image of an object such as a human body, for example, such a photographic film is supplied from a cassette. In recent years, there has been used an arrangement in which a photographic film is loaded into a cassette in a bright room.

More specifically, a magazine which stores a plurality of unexposed photographic films in a light-shielding condition is mounted in a film loading device. After a cassette is mounted in the film loading device, one of the unexposed photographic films is taken out of the magazine and automatically loaded into the cassette. The cassette into which the photographic film has been loaded is then removed from the film loading device for exposure to a radiation image.

Such a film loading device is known from US-A-4 018 033 which has a light-shielding shutter disposed on a film feed path for selectively bringing a magazine chamber and a cassette chamber into communication with each other, so that any unexposed films remaining in the magazine can be protected from exposure to undesired light when the cassette is taken out of the film loading device.

Here, the light-shielding shutter is operated mechanically when the cassette is loaded into the film loading device. A crank is located on the outside of the device which is manually rotated to displace the cassette to a position in the device where it is opened. At the same time as the cassette lid is opened by a downward extending pin, the outer casing of the cassette hits against a light-shielding finger engaged with the light-shielding shutter in order to displace the shutter so that both chambers can communicate with one another.

This type of film loading device involves manual operation and therefore has limited accuracy and efficiency of operation.

On the other hand, in other types of film loading devices a linear solenoid is employed to actuate the light-shielding shutter. When films are loaded into the cassette relatively frequently, the linear solenoid is heated to a considerably high temperature, and might break down owing to an undue temperature rise. Usually, the linear solenoid is prevented from being subject to unnecessarily high temperatures by a thermostatic switch or the like. The linear solenoid which is controlled by the thermostatic switch is however complex in structure, and cannot efficiently load films because of frequently interrupted energization of the linear solenoid.

In the film loading device, a cover of the cassette is opened by an opening and closing mechanism including a suction cup, and after an unexposed photographic film is loaded into the cassette, the cover is closed and a lock pin is actuated and pressed against the cover, which is fixed in position by a lock means in the cassette.

A similar type of film loading device for use with a cassette having a cassette body with a pivotable cover mounted thereon and which also includes cassette locking means is known from DE-A-3 306 720.

In the first mentioned type, the opening and closing mechanism for opening and closing the cover and the lock pin for pressing the cover to actuate the lock means are actuated by different actuators. The actuators require a large installation space and also need respective dedicated drive sources, with the result that the cost of the film loading device is high.

A plurality of unexposed photographic films are accommodated in the magazine also in a bright room. One known arrangement for loading such plural films into the magazine employs an envelope which contains unexposed photographic films in a light-shielding condition. After the envelope with the films is placed into the magazine, only the envelope is pulled out leaving the films in the magazine.

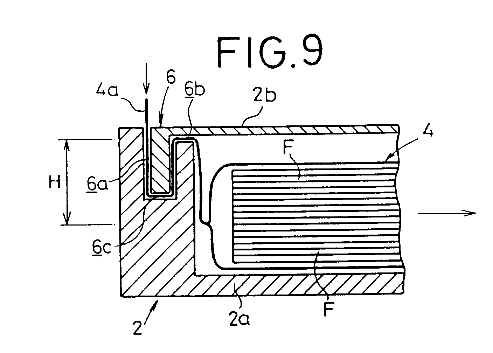

FIG. 9 of the accompanying drawings shows such a known film loading arrangement. When an envelope 4 storing unexposed photographic films F in a light-shielding condition is placed in a body 2a of a magazine 2, a lid 2b is closed and a sealed end 4a of the envelope 4 is hung out of the body 2a through a guide section 6 between the lid 2b and the body 2a. After the end 4a of the envelope 4 is cut off by a cutter (not shown), the opposite end (not shown) of the envelope 4 is pulled in the direction indicated by the arrow from outside of the magazine 2. Now, only the envelope 4 is removed out of the magazine 2, leaving the unexposed photographic films F within the magazine 2. When the envelope 4 is pulled out, its peelable double-layer end portion is guided by and passes through the guide section 6. The guide section 6 comprises a slot-like passage 6a opening out of the magazine 2, a first groove 6b opening into the magazine 2, and a second groove 6c communicating between the passage 6a and the first groove 6b.

With the illustrated arrangement, the first groove 6b is spaced relatively widely from the upper surface of the envelope 4. Therefore, the distance H between the first groove 6b and the inner end of the peelable double-layer end portion is relatively large, presenting a large resistance to the movement of the envelope 4 as it is pulled out of the magazine 2. As a result, it is troublesome and time-consuming to load the films F into the magazine 2, and the envelope 4 may be torn or otherwise damaged when pulled out.

The first groove 6b of the guide section 6 lies substantially parallel to the films F. After the magazine 2 is obliquely mounted in the film loading device, when the films F are to be fed one by one into the cassette, an adjacent film F next to the film F which is to be taken out of the magazine 2 at this time tends to fall into the first groove 6b. When this happens, the films F cannot be fed from the magazine 2. Accordingly, it is not possible to supply the films F efficiently to the cassette.

### SUMMARY OF THE INVENTION

It is the main object of the present invention to provide a film loading device which includes a light-shielding shutter that can be actuated with a simple arrangement disposed on a film feed path for selectively bringing a magazine chamber and a cassette chamber into communication with each other, and which can load films highly efficiently.

The present invention achieves its object by providing a film loading device comprising the features set out in claim 1. The film loading device comprising a first chamber for accomodating a magazine for storing a plurality of unexposed photographic films, a second chamber for accomodating a cassette for receiving a film which has been taken from the magazine and fed along a feed path, a light-shielding shutter for selectively bringing the first and second chambers into communication with each other on the feed path, an opening and closing mechanism for opening and closing the cassette, and a shutter actuating mechanism for actuating the shutter comprising a projection portion engageable with the shutter and displaceable with the opening and closing mechanism to open the light-shielding shutter when the cassette is opened by the opening and closing mechanism.

According to the present invention the shutter actuating mechanism also comprises a resilient member engaging the shutter, the arrangement being such that when the opening and closing mechanism is displaced to close the cassette, the protruding portion disengages from the shutter to allow the shutter to be closed under the resiliency of the resilient member. The film loading device of the present invention operates with the type of cassette comprising a cassette body for loading the film and a cover openably and closably mounted on the cassette body. In a preferred embodiment, the opening and closing mechanism comprises holding means for holding the cover of the cassette in position, and opening and closing means for engaging the cassette body and moving the cassette body to a predetermined angular position with respect to the cover.

In another preferred embodiment of the present invention the holding means comprises a holding member for engaging the cover of the cassette, and a suction cup for sucking the cover.

The opening and closing means of the present invention may comprise a rotative drive source, a link, an opening and closing member which is angularly movable by the rotative drive source through the link, and an engaging finger disposed on the opening and closing member and engageable with the cassette body only, for angularly moving the cassette body through a predetermined angle with respect to the cover.

According to another embodiment of the present invention, the magazine used with the film loading device comprises a magazine body for placing an envelope containing the unexposed photographic films, and a lid openably and closably mounted on the magazine body, the magazine body and the lid jointly defining a guide section for guiding the envelope when the envelope is withdrawn from the magazine, the guide section having a groove positioned away from a surface of the package near the lid toward the magazine body and extending across the plane of the films.

A yet further embodiment is wherein the groove is substantially symmetrical in shape from a center thereof toward opposite ends thereof along a direction transverse to the direction in which the envelope is withdrawn from the magazine.

Further, the magazine body and the lid may define therebetween a film withdrawal slot for allowing an end of the envelope to pass therethrough out of the magazine across the plane of the films.

In the embodiment where the opening and closing means includes lock means for locking the cover to the cassette body, the opening and closing means comprising holding means for holding the cover or the cassette body in position, opening and closing means for engaging and moving the cassette body or the cover to a predetermined angular position with respect to the cover or the cassette body, and pressing means displaceable with the opening and closing means, for pressing the cassette body or the cover and actuating the lock means to securely fasten the cover and the cassette body to each other, when the cassette is closed by the opening and closing means.

The pressing means may comprise a pressing member disposed on the opening and closing member, and a resilient member mounted on the link, for resiliently pressing the pressing member against the cassette body.

The above and other embodiments, features and a tages of the present invention will become more appar from the following description when taken in conjunction with the accompanying drawings in which preferred embodiments of the present invention are shown by way of illustrative example.

### BRIEF DESCRIPTION OF THE DRAWINGS

FIG. 1 is a schematic vertical cross-sectional view of a film loading device according to the present invention;
FIG. 2 is a schematic perspective view of the film loading device shown in FIG. 1;
FIG. 3 is a perspective view of a cassette opening/closing mechanism of the film loading device shown in FIG. 1;
FIG. 4 is a perspective view of a magazine according to a first embodiment of the present invention, of the film loading device;
FIG. 5 is a vertical cross-sectional view of the magazine shown in FIG. 4;
FIG. 6 is a fragmentary elevational view of a guide section in the magazine shown in FIG. 4;
FIGS. 7(a), 7(b), and 7(c) are fragmentary elevational views, partly in cross section, showing the manner in which a cassette is opened and closed and a shutter is opened and closed;
FIG. 8 is a vertical cross-sectional view of a magazine according to a second embodiment of the present invention; and
FIG. 9 is a fragmentary vertical cross-sectional view of a conventional magazine.

### DETAILED DESCRIPTION OF THE PREFERRED EMBODIMENTS

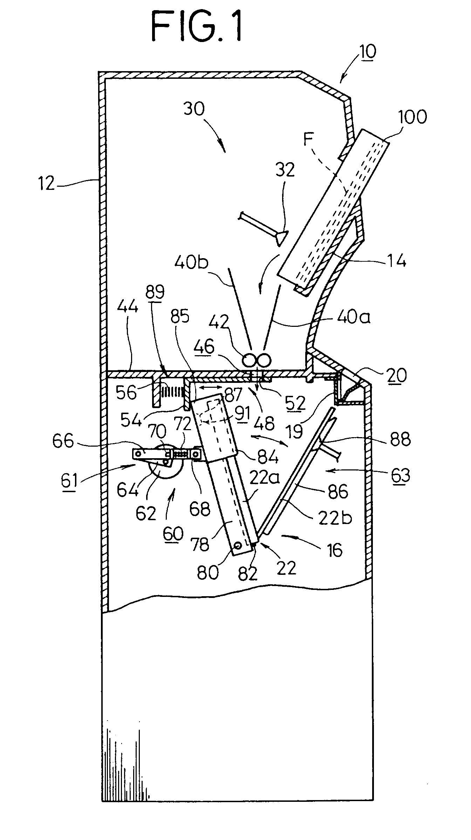

FIG. 1 shows a film loading device 10 according to the present invention. The film loading device 10 has a housing 12 which includes a magazine loading unit 14 in one upper side thereof and a cassette loading unit 16 disposed below the magazine loading unit 14. The magazine loading unit 14 holds a magazine 100 which contains a stack of unexposed photographic films F, and the cassette loading unit 16 holds a cassette 22 which has been inserted from an opening 20 defined in the housing 12 through a shutter 19 which can selectively be opened and closed.

A sheet feed mechanism 30 is disposed in an upper portion of the housing 12 near the magazine 100 held in the magazine loading unit 14. The sheet feed mechanism 30 includes a plurality of suction cups 32 connected to a vacuum source (not shown). The suction cups 32 are movable along a predetermined path to impart a swinging action to the films F when they are to be taken one by one from the magazine 100.

A pair of guide plates 40a, 40b and a pair of feed rollers 42 are disposed below the sheet feed mechanism 30. The feed rollers 42 are positioned near and above a horizontal partition 44 in the housing 12. The feed rollers 42 serve to feed a film F along a feed path into a film insertion slot 46 defined in the partition 44 and extending in a direction normal to the sheet of FIG. 1.

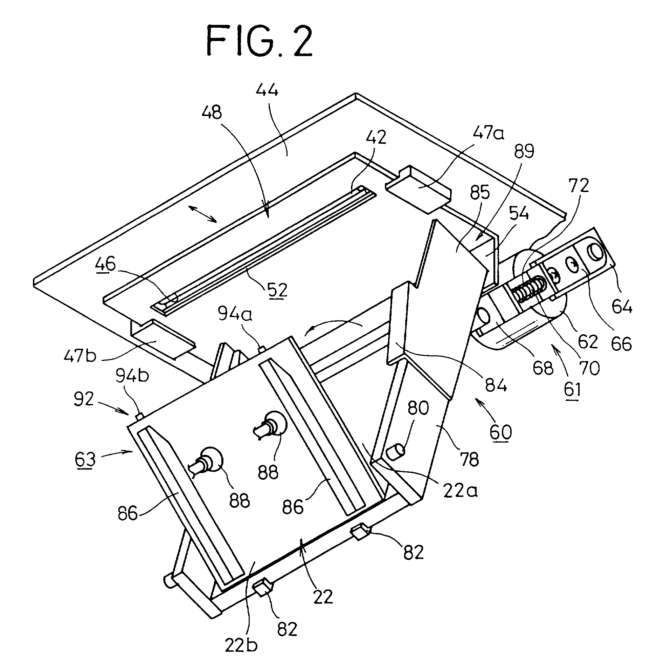

As shown in FIGS. 1 and 2, a light-shielding shutter 48 is mounted on the lower surface of the partition 44 and guided by the guide plates 40a, 40b for back and forth movement across the film insertion slot 46 in the directions indicated by the arrows (FIG. 2). The shutter 48 is normally urged to move to the right in FIG. 1 by a spring 56. The shutter 48 has a slot 52 similar to the film insertion slot 46 and a downwardly bent engaging member 54 against which the spring 56 is held.

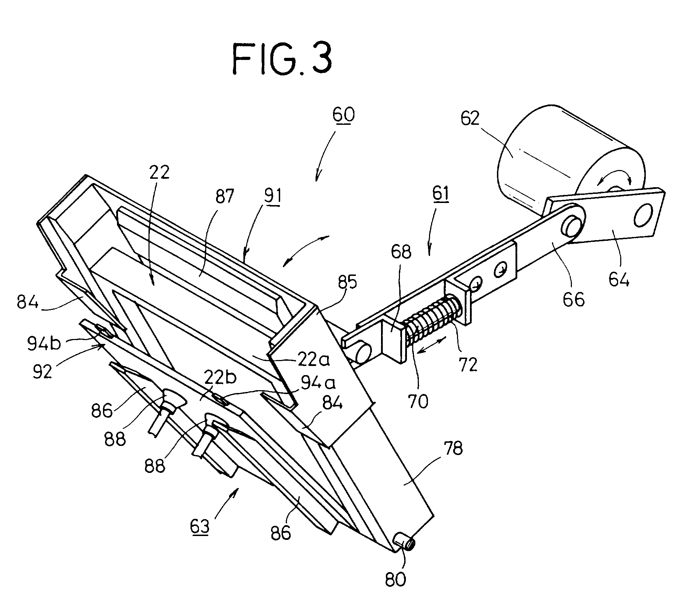

A cassette opening and closing mechanism 60 is disposed below the shutter 48. As shown in FIGS. 2 and 3, the cassette opening and closing mechanism 60 includes an opening and closing mechanism 61 and a holding mechanism 63. The opening and closing mechanism 61 includes a rotative drive source 62 with one end of a link 64 mounted on its rotatable shaft. The other end of the link 64 is coupled to one end of an arm 66, the other end of which is joined to a slide plate 68 through a rod 70 and a coil spring 72. The slide plate 68 has one end coupled to an opening and closing member 78. The opening and closing member 78 is swingably supported on a support pin 80 at its lower end. The opening and closing member 78 also has a pair of stoppers 82 on the lower end for holding the cassette 22, and a pair of bent engaging fingers 84 on its upper portion. The opening and closing member 78 includes projecting portions 85 upward of the respective engaging fingers 84. The projecting portions 85 and the spring 56 which engages the shutter 48 jointly serve as a shutter actuating mechanism 89.

The opening and closing member 78 has a presser 87 disposed inwardly of the engaging fingers 84. The presser 87 and the coil spring 72 jointly constitute a pressing mechanism 91.

The holding mechanism 63 comprises a pair of cassette holders 86 facing the opening and closing member 78 and obliquely fixed to the cassette loading unit 16, and a pair of suction cups 88 connected to a vacuum source (not shown) and positioned between cassette holders 86.

The cassette 22 which is to be loaded into the cassette loading unit 16 has a cassette body 22a for loading a single film F and a cover 22b which is openable and closable with respect to the cassette body 22a. The cover 22b is shorter than the cassette body 22a in the direction normal to the sheet of FIG. 1. The engaging fingers 84 of the opening and closing member 78 can hold the cassette body 22a out of physical interference with the cover 22b. The cassette 22 has a known lock means 92 for locking the cover 22b on the cassette body 22a. The lock means 92 comprises a pair of stoppers 94a, 94b disposed in the cover 22b and resiliently retractably projecting from a free end of the cover 22b. When the cover 22b is closed, the stoppers 94a, 94b are inserted respectively in holes (not shown) defined in the cassette body 22a.

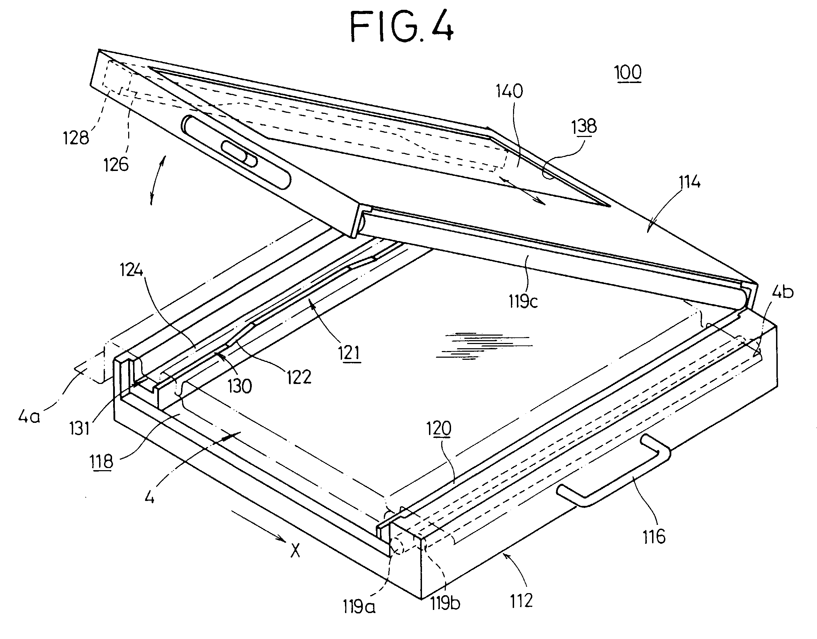

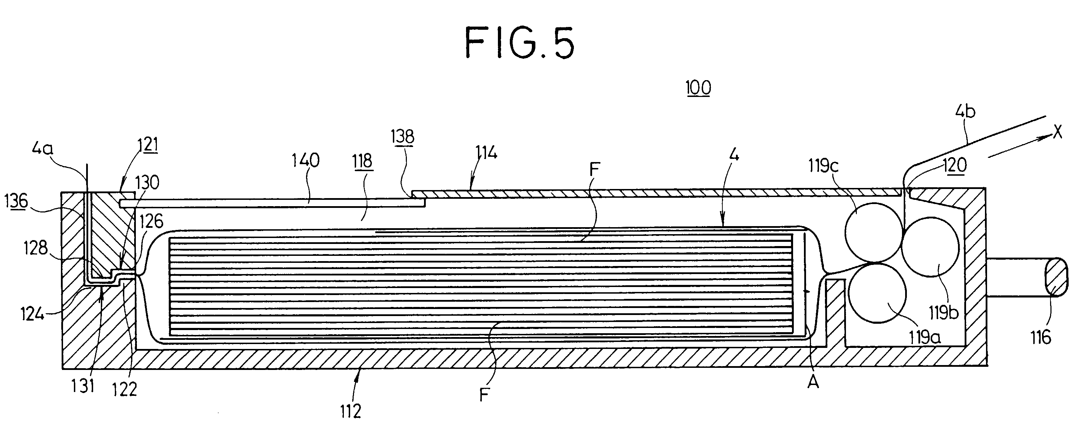

As shown in FIGS. 4 and 5, the magazine 100 comprises a magazine body 112 and a lid 114 openably and closably mounted on the magazine body 112, the magazine body 112 having a handle 116 on one end thereof. The magazine body 112 defines therein a space 118 for placing an envelope 4. A pair of parallel light-shielding rollers 119a, 119b is disposed in the space 118 at one end thereof near the handle 116. Another roller 119c is mounted on the lid 114 at one end thereof for rolling engagement with the rollers 119a, 119b. The magazine body 112 and the lid 114 jointly define an envelope withdrawal slot or opening 120 above the rollers 119a, 119b, 119c for withdrawing an end 4b of the envelope 4 therethrough. The envelope withdrawal slot 120 is defined between an upper edge of the magazine body 112 and an edge of the lid 114, and extends linearly in a direction normal to the direction (indicated by the arrow X) in which the envelope 4 is pulled out of the magazine 100.

The other end of the magazine body 112 has first and second protruding portions 122, 124. The lid 114 also has third and fourth protruding portions 126, 128 coacting respectively with the first and second protruding portions 122, 124. The first through fourth protruding portions 122, 124, 126, 128 jointly serve as a guide section 121.

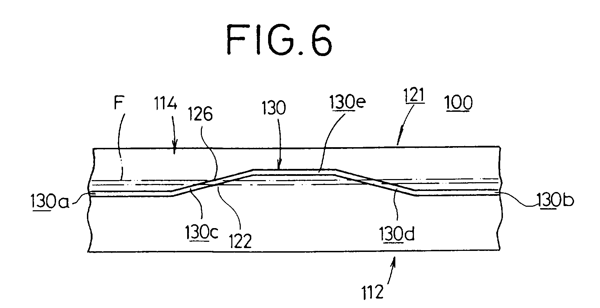

As shown in FIG. 6, the first protruding portion 122 and the third protruding portion 126 define therebetween a first groove 130 positioned lower than the upper surface of the envelope 4 (i.e., the surface near the lid 114). The first groove 130 has two spaced side groove segments 130a, 130b extending parallel to the films F and having the same length as each other. The groove segments 130a, 130b have respective ends communicating with groove segments 130c, 130d, respectively, which are inclined to a direction parallel to the films F at a certain angle smaller than 90°. The first groove 130 also has a central groove segment 130e whose opposite ends communicate with inner ends of the groove segments 130c, 130d, respectively, the groove segment 130e extending parallel to the films F. When the lid 114 is closed with respect to the magazine body 112, therefore, the groove segments 130c, 130d are formed which extend from the central portion to the opposite end portions of the first groove 130, the groove segments 130c, 130d being substantially symmetric in shape and not parallel to the films F.

The second and fourth protruding portions 124, 128 are substantially complementary in shape to the first and third protruding portions 122, 126, respectively, and define therebetween a second groove 131 which is positioned in the magazine body 112 and contiguous to the first groove 130 through steps.

The lid 114 is smaller than the magazine body 112. The other edge of the lid 114 and the other upper edge of the magazine body 112 jointly define therebetween a passage 136 which communicates with the first and second grooves 130, 131. The passage 136 allows a sealed end 4a of the envelope 4 to be hung out of the magazine 100. The lid 114 has an opening 138 defined adjacent to the guide section 121, for taking out a film F from within the magazine body 112 therethrough. The opening 138 can selectively be opened and closed by a shutter 140.

The film loading device according to the present invention is basically constructed as described above. Operation of the film loading device will now be described below.

First, a process of storing a plurality of unexposed photographic films F in the magazine 100 at one time in a bright room will be described below with reference to FIGS. 4 and 5. The lid 114 is opened and the envelope 4 is placed into the chamber 118 in the magazine body 112. The envelope 4 stores therein a plurality of unexposed photographic films F in a light-shielding condition which are held together by a channel-shaped pad A of cardboard. The peelable double-layer end portion contiguous to the end 4a of the envelope 4 is positioned on the first and second protruding portions 122, 124 and extends through the external passage 136. The other end portion contiguous to the other end 4b of the envelope 4 extends along the rollers 119a, 119b, 119c, with the end 4b projecting out of the slot 120.

Then, the lid 114 is closed to shield the chamber 118 from extraneous light. Now, the end portion leading to the end 4a of the envelope 4 is held in the passage 136 and the grooves 130, 131 of the guide section 121, whereas the other end portion leading to the other end 4b is gripped by the rollers 119a, 119b, 119c.

The sealed end 4a of the envelope 4 is cut off by a cutter (not shown), and thereafter the other end 4b is pulled in the direction indicated by the arrow X (FiG. 5) to withdraw the envelope 4 out of the magazine 100 from the slot 120 while the envelope 4 is being squeezed by the rollers 119a through 119c, leaving the films F together with the cardboard A in the space 118. As illustrated in FIG. 5, the first groove 130 of the guide section 121 is defined in a position lower than the upper surface of the envelope 4. Therefore, the resistance applied to the envelope 4 as it is drawn out of the magazine 100 is greatly reduced, so that the envelope 4 can easily be removed from the magazine 100 without damage. Furthermore, since the first groove 130 is substantially symmetrical in shape from its center toward the opposite ends as shown in FIG. 6, the end 4a of the envelope 4 is pulled substantially uniformly along its length.

The slot 120 for withdrawing the end 4b of the envelope 4 out of the magazine 100 is defined in the upper portion of the magazine body 112. Therefore, the end 4b can easily be pulled in the direction indicated by the arrow X by the user while gripping the handle 116. Accordingly, the envelope 4 can reliably be removed from the magazine 100.

After the films F are loaded in the magazine 100, the magazine 100 is loaded in the magazine loading unit 14 of the film loading device 10. In the magazine loading unit 14, the sheet feed mechanism 30 is actuated after the shutter 140 of the magazine 100 is opened. The suction cup 32 sucks and holds the uppermost film F in the magazine 100, giving a swinging action to the film F, and then the film F is supplied to the guide plates 40a, 40b and the feed roller pair 42 (see FIG. 1).

The magazine 100 is inclined with respect to the vertical direction with the guide section 121 down. The first groove 130 of the guide section 121 is composed of the groove segments 130c, 130d extending across the plane of the film F (see FIG. 6). Therefore, even if another film F adjacent to the film F which has directly been sucked up by the suction cup 32 is accidentally displaced toward the first groove 130, the film F is prevented from falling into the first groove 130. Therefore, the sheet feed mechanism 30 can reliably and effectively feed the film F toward the cassette 22 without a feed failure.

As shown in FIG. 1, the cassette 22 in the cassette loading unit 16 has been opened by the cassette opening and closing mechanism 60. More specifically, the cover 22b of the cassette 22 has been positioned with respect to the cassette holders 86 by being sucked by the suction cups 88 of the holding mechanism 63, and the engaging fingers 84 of the opening and closing mechanism 61 have engaged the cassette body 22a of the cassette 22.

After the lock means 92 is released, the rotative drive source 62 is actuated to rotate the link 64, causing the arm 66 to pull the slide plate 68 for thereby angularly moving the opening and closing member 78 together with the cassette body 22a away from the cover 22b.

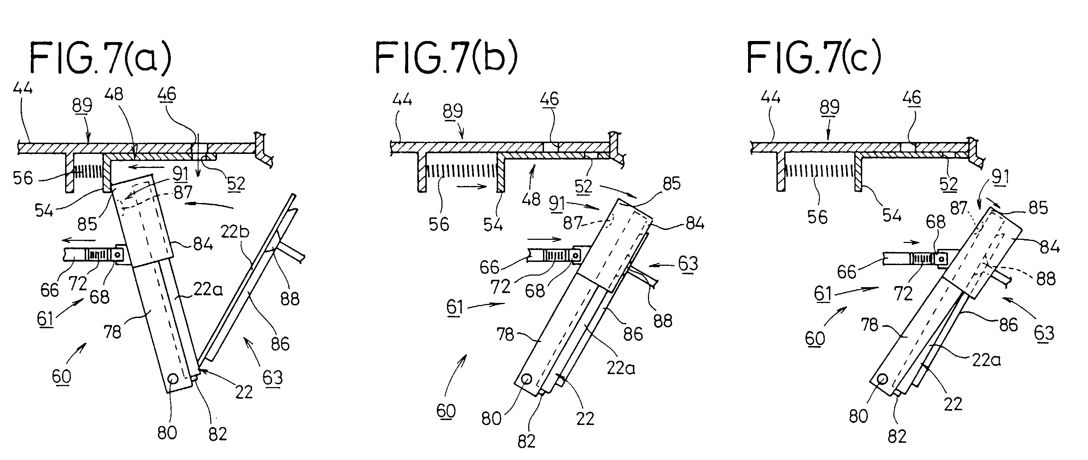

When the opening and closing member 78 swings about the support pin 80, the projecting portions 85 integral with the engaging fingers 84 engage the engaging member 54 of the shutter 48, and move the engaging member 54 in the direction indicated by the arrow in FIG. 7(a) against the bias of the spring 56. Upon stoppage of the opening and closing member 78 in a predetermined angular position, the slot 52 of the shutter 48 is held in registry with the film insertion slot 46 in the partition 44. Now, the film F is fed by the feed roller pair 42 to fall into a position between the cassette body 22a and the cover 22b.

Then, the continued energization of the rotative drive source 62 enables the arm 66 to turn the cassette body 22a toward the cover 22b, thus closing the cassette 22. At the same time, the shutter 48 is displaced in the direction indicated by the arrow (FIG. 7(b)) under the bias of the spring 56. Upon further movement of the arm 66 toward the cover 22b, the presser 87 of the opening and closing member 78 is pressed against the cassette body 22a. Since the slide plate 68 is coupled to the arm 68 through the rod 70 and the coil spring 72, the presser 87 resiliently presses the cassette body 22a under the bias of the coil spring 72 (see FIG. 7(c)). When the pressing mechanism 91 is thus actuated, the stoppers 94a, 94b in the cover 22b are inserted into the respective holes in the cassette body 22a, and the cassette body 22a and the cover 22b are locked together by the lock means 92.

The film F is now loaded in the cassette 22 in a light-shielding condition, and the shutter 48 is displaced to the right (FIG. 1) under the resiliency of the spring 56. The suction cups 88 are now inactivated and the shutter 19 is opened to allow the cassette 22 to be removed from the cassette loading unit 16. At this time, no undesirable light enters the upper chamber in the housing 12, in which the magazine 100 is loaded.

The cassette 22 with the unexposed film F loaded therein is sent into a radiation imaging apparatus (not shown), in which the film F is exposed to the radiation image of an object such as a human body.

In this embodiment, the opening and closing member 78 of the cassette opening and closing mechanism 60 which swings the cassette body 22a to open and close the cassette 22 has the projecting portions 85 of the shutter actuating mechanism 89. Therefore, simply by angularly moving the opening and closing member 78 with the rotative drive source 62, the projecting portions 85 engage the engaging member 54 of the shutter 48 to bring the slot 52 of the shutter 48 into communication with the film insertion slot 46.

When the opening and closing member 78 is angularly moved toward the cover 22b to close the cassette 22, the shutter 48 closes the film insertion slot 46 under the resilient forces of the spring 56 of the shutter actuating mechanism 89. Therefore, it is not necessary to employ a dedicated drive source such as a linear solenoid for opening and closing the shutter 48. Instead, the shutter actuating mechanism 89 is simple in construction, small in size, and can be manufactured economically. Because no linear solenoid is employed, the shutter actuating mechanism 89 is not subject to undue temperature rises. As a consequence, the film loading process can efficiently be performed without interruption.

Moreover, the presser 87 of the pressing mechanism 91 is disposed on the opening and closing member 78, so that the cassette body 22a can be opened and closed and the cassette body 22a and the cover 22b can be securely fastened to each other, continuously and reliably by the actuation of the single rotative drive source 62. The cassette opening and closing mechanism 60 is much smaller and can be manufactured much more economically than would be if the cassette body 22a were opened and closed and the cassette body 22a and the cover 22b were securely fastened to each other by respective drive sources.

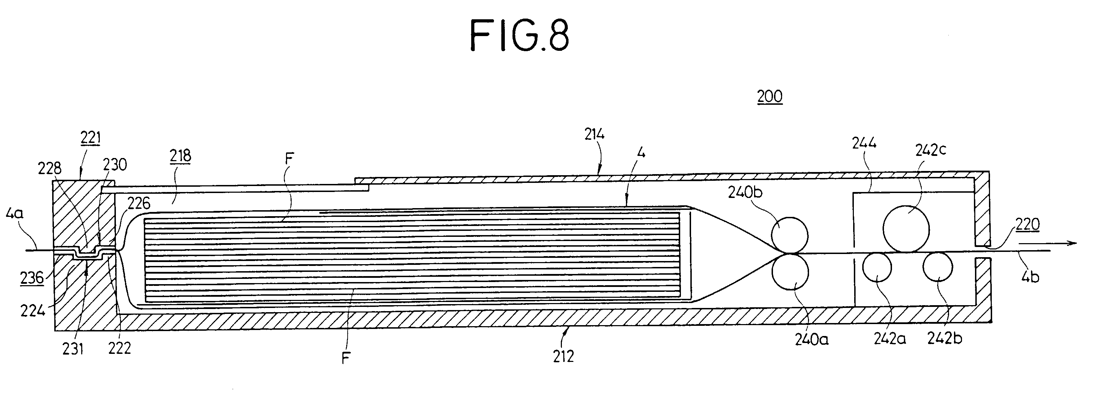

A magazine 200 for use with a second embodiment of the present invention will be described below with reference to FIG. 8. Those parts shown in FIG. 8 which are identical to those of the magazine 100 according to the first embodiment are denoted by reference numerals which are the sum of the corresponding reference numerals and 100, and will not be described in detail.

The magazine 200 has a passage 236 contiguous to grooves 230, 231 in a guide section 221 and a film withdrawal slot 220, the passage 236 and the film withdrawal slot 220 lying parallel to the films F stored in the magazine 200. The magazine 200 includes a magazine body 212 which supports a squeezing roller 240a and light-shielding rollers 242a, 242b near the slot 220, and a lid 214 which supports a squeezing roller 240b and a light-shielding roller 242c. The light-shielding rollers 242a, 242b, 242c are surrounded by a light-shielding partition 244.

Films F are loaded into the magazine 200 in substantially the same manner as they are loaded into the magazine 100 according to the first embodiment.

Since the passage 236 and the film withdrawal slot 220 extend parallel to the films F, the envelope 4 can smoothly be removed from the magazine 200 in the same manner as with the first embodiment.

In the first and second embodiments, the guide sections 121 and 221 have the straight grooves 130, 131 and 230, 231, respectively. However, the guide sections may have curved grooves or otherwise shaped grooves insofar as they have groove segments which extend across the plane of the film F.

In the film loading device according to the present invention, when the opening and closing mechanism is displaced to close the cassette, the shutter actuating mechanism associated with the opening and closing mechanism actuates the shutter to bring the chamber in which the magazine is positioned into communication with the chamber in which the cassette is positioned. Accordingly, no dedicated drive source is necessary for actuating the shutter, and the shutter actuating mechanism is simple in structure. The film loading device can thus be manufactured inexpensively.

When the opening and closing mechanism is displaced to close the cassette, the pressing mechanism associated with the opening and closing mechanism also actuates the lock of the cassette, locking the cassette in position. Therefore, any dedicated drive source for actuating the pressing mechanism is not necessary, so that the cassette opening and closing mechanism is relatively small in size and low in cost.

The grooves in the guide section for guiding the envelope end portion when the envelope is to be removed from the magazine are positioned lower than the height of the package in the magazine. Consequently, the resistance which is presented to the envelope as it is pulled out of the magazine is reduced, allowing the envelope to be removed easily and reliably.

Since the groove opening into the magazine chamber extends across the plane of the film, when films are fed one by one from the magazine which is obliquely mounted in the magazine loading unit, an adjacent film next to the film to be fed from the magazine is prevented from falling into the groove. Therefore, the films can efficiently be fed one by one reliably from the magazine.

Although certain preferred embodiments have been shown and described, it should be understood that many changes and modifications may be made therein without departing from the scope of the appended claims.

## Claims

1. A film loading device (10) comprising:
a first chamber (14) for accomodating a magazine (100) for storing a plurality of unexposed photographic films;
a second chamber (16) for accomodating a cassette (22) for receiving a film which has been taken out from said magazine and fed along a feed path, said cassette including a cassette body (22a) and a cover (22b);
a light-shielding shutter (48) for selectively bringing said first and second chambers into communication with each other along said feed path;
an opening and closing mechanism (60) for opening and closing said cassette; and
a shutter actuating mechanism (89) for actuating said shutter, comprising a projection portion (85) engageable with said shutter and being displaceable when said opening and closing mechanism is operated for opening said cassette and thereby opening said light-shielding shutter,
**characterized in that**
said opening and closing mechanism is arranged for cassettes having said cassette cover (22b) pivotably mounted on said cassette body (22a); and in that
said shutter actuating mechanism (89) further comprises a resilient member (56) engaging said shutter whereby said resilient member is stressed when said shutter is opened, and wherein
said projection portion (85) is operable with said opening and closing mechanism such that when said opening and closing mechanism is displaced to close the cassette, said projection portion disengages from said shutter to allow said shutter to be closed under the resiliency of said resilient member.

2. A film loading device according to claim 1, wherein said opening and closing mechanism comprises:
holding means (63) for holding said cover or said cassette body of said cassette in position;
opening and closing means (61) for engaging and moving said cassette body or said cover to a predetermined angular position with respect to said cover or said cassette body; and
pressing means (87) displaceable with said opening and closing means (61) for pressing said cassette body or cover and actuating lock means (92) included in said cassette to securely fasten said cover and said cassette body to each other when said cassette is closed by said opening and closing means.

3. A film loading device according to claim 2, wherein said holding means comprises:
a holding member (86) for engaging said cover of the cassette; and
a suction cup (88) for sucking said cover.

4. A film loading device according to claim 2, wherein said opening and closing means (61) comprises:
a rotative drive source; (62)
a link (64);
an opening and closing member (78) which is angularly moveable by said rotative drive source through said link; and
an engaging finger (84) disposed on said opening and closing member and engageable with said cassette body only, for angularly moving said cassette body through a predetermined angle with respect to said cover;
said pressing means (87) comprising means for pressing said cassette body to cause said lock means (92) to fasten said cassette body and said cover to each other when said cassette body is angularly moved toward said cover.

5. A film loading device according to claim 4, wherein said pressing means (87) comprises:
a pressing member (87) disposed on said opening and closing means (61); and
a further resilient member (72) mounted on said link (64) for resiliently pressing said pressing member against said cassette body.

## Patentansprüche

1. Filmladevorrichtung (10), die umfaßt:
eine erste Kammer (14) zur Aufnahme eines Magazins (100) zur Lagerung einer Vielzahl von unbelichteten fotografischen Filmen;
eine zweite Kammer (16) zur Aufnahme einer Kassette (22) zum Empfangen eines Filmes, der aus dem Magazin entnommen und entlang eines Führungsweges geführt worden ist, welche Kassette einen Kassettenkörper (22a) und eine Abdeckung (22b) enthält;
einen lichtabschirmenden Verschluß (48) zur wahlweisen Versetzung der ersten und zweiten Kammern in gegenseitige Verbindung entlang des Führungsweges;
einen Öffnungs- und Verschließungs-Mechanismus (60) zum Öffnen und Verschließen der Kassette;
einen Verschlußbetätigungsmechanismus (89) zum Betätigen des Verschlusses, umfassend einen Vorsprungsbereich (85), der mit dem Verschluß in Eingriff bringbar ist und versetzbar ist, wenn der Öffnungs- und Verschließungs-Mechanismus zum Öffnen der Kassette betätigt wird und dadurch den lichtabschirmenden Verschluß öffnet,
**dadurch gekennzeichnet, daß**
der Öffnungs- und Verschließungs-Mechanismus für Kassetten eingerichtet ist, welche die Kassettenabdeckung (22b) schwenkbar an dem Kassettenkörper (22a) angebracht aufweisen; und daß der Verschlußbetätigungsmechanismus (89) ferner ein elastisches Element (56) umfaßt, das mit dem Verschluß in Eingriff steht, wodurch das elastische Element gespannt wird, wenn der Verschluß geöffnet ist, und wobei
der Vorsprungsbereich (85) mit dem Öffnungs- und Verschließungs-Mechanismus derart betätigbar ist, daß, wenn der Öffnungs- und Verschließungs-Mechanismus versetzt wird, um die Kassette zu schließen, der Vorsprungsbereich aus dem Verschluß ausrückt, um dem Verschluß zu ermöglichen, unter der Elastizität von dem elastischen Element geschlossen zu werden.

2. Filmladevorrichtung gemäß Anspruch 1, bei der der Öffnungs- und Verschließungs-Mechanismus umfaßt:
Haltemittel (63) zum Halten der Abdeckung oder des Kassettenkörpers von der Kassette in Position;
Öffnungs- und Verschließungsmittel (61) zum Eingriff und Bewegen des Kassettenkörpers oder der Abdeckung zu einer vorbestimmten Winkelposition in Bezug auf die Abdeckung oder den Kassettenkörper; und
Druckmittel (87), die mit dem Öffnungs- und Verschließungsmittel (61) versetzbar sind, zum Drücken des Kassettenkörpers oder der Abdeckung und von Betätigungsverriegelungsmitteln (92), die in der Kassette enthalten sind, um die Abdeckung und den Kassettenkörper sicher aneinander zu befestigen, wenn die Kassette durch das Öffnungs- und Verschließungsmittel geschlossen ist.

3. Filmladevorrichtung gemäß Anspruch 2, bei der das Haltemittel umfaßt:
ein Halteelement (86) zum Eingriff mit der Abdeckung von der Kassette; und
einen Saugnapf (88) zum Ansaugen der Abdeckung.

4. Filmladevorrichtung gemäß Anspruch 2, bei der das Öffnungs- und Verschließungsmittel (61) umfaßt:
eine Drehantriebsquelle (62);
eine Verbindung (64);
ein Öffnungs- und Verschließungselement (78), das durch die Drehantriebsquelle über die Verbindung winklig beweglich ist; und
einen Eingriffsfinger (84), der auf dem Öffnungs- und Verschließungselement angeordnet ist und nur mit dem Kasettenkörper in Eingriff bringbar ist, um den Kassettenkörper um einen vorbestimmten Winkel in bezug auf die Abdeckung zu bewegen;
welche Druckmittel (87) Mittel zum Drücken des Kassettenkörpers umfassen, um das Verriegelungsmittel (92) zu veranlassen, den Kassettenkörper und die Abdeckung aneinander zu befestigen, wenn der Kassettenkörper winklig zu der Abdeckung bewegt wird.

5. Filmladevorrichtung gemäß Anspruch 4, bei der das Druckmittel (87) umfaßt:
ein Druckelement (87), das an dem Öffnungs- und Verschließungsmittel (61) angeordnet ist; und
ein weiteres elastisches Element (72), das auf der Verbindung (64) zum elastischen Drücken des Druckelementes gegen den Kassettenkörper angebracht ist.

## Revendications

1. Dispositif de chargement de film (10) comprenant :
une première chambre (14) destinée à recevoir un magasin (100) destiné à stocker une pluralité de films photographiques non exposés ;
une deuxième chambre (16) destinée à recevoir une cassette (22) destinée à recevoir un film qui a été extrait dudit magasin et acheminé le long d'un trajet d'acheminement, ladite cassette comprenant un corps de cassette (22a) et une couvercle (22b) ;
un obturateur (48) d'arrêt de la lumière, destiné à mettre sélectivement lesdites première et deuxième chambres en communication entre elles le long dudit trajet d'acheminement ;
un mécanisme d'ouverture et de fermeture (60) destiné à ouvrir et fermer ladite cassette ; et
un mécanisme (89) d'actionnement de l'obturateur, destiné à actionner ledit obturateur, comprenant une portion saillante (85) qui peut être mise en prise avec ledit obturateur et qui peut se déplacer lorsque ledit mécanisme d'ouverture et de fermeture est actionné pour ouvrir ladite cassette et pour ouvrir par ce moyen ledit obturateur d'arrêt de la lumière,
caractérisé en ce que
ledit mécanisme d'ouverture et de fermeture est agencé pour des cassettes ayant ledit couvercle de cassette (22b) monté pivotant sur ledit corps de cassette (22a) ; et en ce que
ledit mécanisme (89) d'actionnement de l'obturateur comprend en outre un élément élastique (56) en prise avec ledit obturateur, de sorte que ledit élément élastique est chargé lorsque ledit obturateur est ouvert ; et dans lequel
ladite portion saillante (85) peut être actionnée avec ledit mécanisme d'ouverture et de fermeture de telle manière que, lorsque ledit mécanisme d'ouverture et de fermeture est mis en mouvement pour fermer la cassette, ladite portion saillante se dégage dudit obturateur pour permettre audit obturateur de se fermer sous l'effet de l'élasticité dudit élément élastique.

2. Dispositif de chargement de film selon la revendication 1, dans lequel ledit mécanisme d'ouverture et de fermeture comprenant :
des moyens de maintien (63) destinés à maintenir ledit couvercle ou ledit corps de cassette de ladite cassette en position ;
des moyens d'ouverture et de fermeture (61) destinés à attaquer ledit corps de cassette ou ledit couvercle et à le placer dans une position angulaire prédéterminée par rapport audit couvercle ou audit corps de cassette ; et
des moyens presseurs (87) qui peuvent se déplacer avec lesdits moyens d'ouverture et de fermeture (61) pour presser ledit corps de cassette ou ledit couvercle et pour actionner des moyens de verrouillage (92) inclus dans ladite cassette pour fixer rigidement ledit couvercle ou ledit corps de cassette l'un à l'autre lorsque ladite cassette est fermée par lesdits moyens d'ouverture et de fermeture.

3. Dispositif de chargement de film selon la revendication 2, dans lequel lesdits moyens de maintien comprennent :
un élément de maintien (86) destiné à attaquer ledit couvercle ou la cassette ; et
une ventouse (88) destinée à attirer ledit couvercle.

4. Dispositif de chargement de film selon la revendication 2, dans lequel lesdits moyens d'ouverture et de fermeture (61) comprennent :
une source d'entraînement en rotation (62) ;
une tringlerie (64) ;
un élément d'ouverture et de fermeture (78) qui peut être mis en mouvement angulaire par ladite source d'entraînement en rotation par l'intermédiaire de ladite tringlerie ; et
un doigt d'attaque (84) disposé sur ledit élément d'ouverture et de fermeture et qui peut être mis en prise avec le seul corps de cassette, pour déplacer ledit corps de cassette en mouvement angulaire sur un angle prédéterminé par rapport audit couvercle ;
lesdits moyens presseurs (87) comprennent des moyens destinés à presser ledit corps de cassette pour amener lesdits moyens de verrouillage (92) à fixer ledit corps de cassette et ledit couvercle l'un à l'autre lorsque ledit couvercle est mis en mouvement angulaire en direction dudit couvercle.

5. Dispositif de chargement de film selon la revendication 4, dans lequel lesdits moyens presseurs (87) comprennent :
un élément presseur (87) disposé sur lesdits moyens d'ouverture et de fermeture (61) ; et
un élément élastique additionnel (72) monté sur ladite tringlerie (64) pour presser élastiquement ledit élément presseur contre ledit corps de cassette.
